# EUROPÄISCHE PATENTANMELDUNG

(11) **EP 3 623 891 A1**
(43) Veröffentlichungstag der Anmeldung: **18.03.2020**
(21) Anmeldenummer: 18194871.2
(22) Anmeldetag: 17.09.2018
(51) Int. Cl.: G05B 23/02

(54) **INDIVIDUALISIERBARE BILDHIERARCHIEN FÜR EIN LEITSYSTEM EINER TECHNISCHEN ANLAGE**

(71) Anmelder: Siemens Aktiengesellschaft, 80333 München (DE)
(72) Erfinder: Lutz, Benjamin, 76327 Pfinztal (DE)

(57) **Zusammenfassung**

Vorgeschlagen wird ein Individualisierungsdienst (8) zur Implementierung in einem Leitsystem (1) einer technischen Anlage, insbesondere Fertigungs- oder Prozessanlage, der dazu ausgebildet und vorgesehen ist, einem Bediener des Leitsystems (1) eine zur Laufzeit der technischen Anlage individualisierbare Anzeige von Anlagenbildern bereitzustellen.

## Beschreibung

Die Erfindung betrifft einen Individualisierungsdienst zur Implementierung in einem Leitsystem einer technischen Anlage, insbesondere Fertigungs- oder Prozessanlage, nach Anspruch 1. Außerdem betrifft die Erfindung einen Operation Station Server eines Leitsystems einer technischen Anlage nach Anspruch 6. Zudem betrifft die Erfindung ein Leitsystem einer technischen Anlage, insbesondere Fertigungs- oder Prozessanlage, nach Anspruch 8.

Zur Navigation zwischen Anlagenbildern in einem Operator Station Client für das Bedienen und Beobachten durch Operatoren werden so genannte Bildhierarchien genutzt - d.h. die für das Bedienen und Beobachten vorgesehenen Anlagenbilder werden mittels einer hierarchisch (auf- und zusammenklappbaren) Baumstruktur angeboten. Über diese Baumstruktur können die Anlagenbilder zur Laufzeit der technischen Anlage geöffnet werden.

Jeder Knoten der Bildhierarchie referenziert dabei ein Anlagenbild und einen so genannten Gruppenalarmstatus. Der Gruppenalarmstatus stellt den Alarmstatus des jeweiligen Anlagenbildes dar, d.h. alle Alarme der Prozessobjekte in einem Anlagenbild werden nach Alarmklassen getrennt aufsummiert und in der Bildhierarchie dargestellt. So kann ein Bediener eines Leitsystems der technischen Anlage beim Betrachten der Bildhierarchie unmittelbar erkennen, in welchem Anlagenbild alarmgebende Prozessobjekte vorhanden sind. Mittels eines sogenannten Loop-Ins kann er unmittelbar zu diesen Prozessobjekten navigieren. Dies ist sogar dann möglich, wenn das Prozessobjekt bei einer kompakt dargestellten Bildhierarchie nicht erkennbar ist.

Die Bildhierarchie wird statisch in einer Engineering-Umgebung des Leitsystems der technischen Anlage projektiert. Die Bildhierarchie enthält oftmals zahlreiche, teilweise mehrere hundert Anlagenbilder. Daher wird die Bildhierarchie aus Übersichtlichkeitsgründen in der Regel zu einer Laufzeit der technischen Anlage nur in einem kompakten Modus dargestellt. Dabei muss der Bediener des Leitsystems regelmäßig durch weite Bereiche der Bildhierarchie navigieren, um zwischen den für ihn wichtigsten Anlagenbildern zu navigieren.

Dem Bediener ist es somit in der Regel nicht möglich, die für ihn wichtigsten Anlagenbilder gemeinsam in einer Bildhierarchie mit einem aktuellen, dynamisierten (Gruppen-)Alarmstatus zu sehen.

Die DE 10 2015 215 828 A1 offenbart eine bislang bekannte Verwendung von Anlagenbildern in einem Leitsystem einer technischen Anlage.

Der Erfindung liegt die Aufgabe zugrunde, ein Leitsystem anzugeben, das ein effizienteres Bedienen und Beobachten ermöglicht.

Diese Aufgabe wird gelöst durch einen Individualisierungsdienst zur Implementierung in einem Leitsystem einer technischen Anlage, insbesondere Fertigungs- oder Prozessanlage, nach Anspruch 1. Außerdem wird die Aufgabe gelöst durch einen Operation Station Server eines Leitsystems einer technischen Anlage nach Anspruch 6. Zudem wird die Aufgabe gelöst durch ein Leitsystem einer technischen Anlage, insbesondere Fertigungs- oder Prozessanlage, nach Anspruch 8. Vorteilhafte Weiterbildungen ergeben sich aus den abhängigen Ansprüchen.

Ein Individualisierungsdienst zur Implementierung in einem Leitsystem einer technischen Anlage, insbesondere Fertigungs- oder Prozessanlage, ist erfindungsgemäß dazu ausgebildet und vorgesehen, einem Bediener des Leitsystems eine zur Laufzeit der technischen Anlage individualisierbare Anzeige von Anlagenbildern bereitzustellen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Diese Anlagen verfügen jeweils über ein Leitsystem oder zumindest ein computerunterstütztes Modul zur Steuerung und Regelung des ablaufenden Prozesses oder der Produktion. Unter einem Leitsystem wird im vorliegenden Kontext ein computergestütztes, technisches System verstanden, das Funktionalitäten zum Darstellen, Bedienen und Leiten einer technischen Fertigungs- oder Produktionsanlage umfasst. Das Leitsystem umfasst im vorliegenden Fall Sensoren zur Ermittlung von Messwerten sowie verschiedene Aktoren. Zudem umfasst das Leitsystem sogenannte prozess- oder fertigungsnahe Komponenten, die zur Ansteuerung der Aktoren bzw. Sensoren dienen. Darüber hinaus weist das Leitsystem u.a. Mittel zur Visualisierung der technischen Anlage und zu einem Engineering auf. Unter dem Begriff Leitsystem sind zusätzlich auch weitere Recheneinheiten für komplexere Regelungen und Systeme zur Datenspeicherung und -verarbeitung zu fassen.

Um effizienter zwischen den für jeden Bediener des Leitsystems individuell wichtigsten Bilder navigieren zu können, wird neben der bislang bekannten statischen, im Engineering projektierten Bildhierarchie, eine dynamisch zur Laufzeit individualisierbare Bildhierarchie bereitgestellt. Der Bediener kann diese mittels des Individualisierungsservices zur Laufzeit der technischen Anlage selbst erstellen, optimieren und pflegen, um effizient zwischen seinen favorisierten Anlagenbildern navigieren zu können. Dadurch kann der Bediener beispielsweise schneller Alarmursachen identifizieren.

Bei einer bevorzugten Weiterbildung der Erfindung hinterlegt der Individualisierungsdienst einen Individualisierungseingabestrom des Bedieners in einem lernfähigen System, insbesondere einem neuronalen Netzwerk. Mittels des lernfähigen Systems kann der Individualisierungsdienst dann dem Bediener automatisiert Anlagenbilder vorschlagen, die er zur Individualisierung der Anzeige von Anlagenbildern einsetzen kann. Dabei kann der Individualisierungsservice vorteilhafterweise auf in dem Leitsystem vorhandene Informationen über die projektierten Anlagenbilder zurückgreifen, um dem Bediener beispielsweise zusätzliche Anlagenbilder für seine Individualisierung vorzuschlagen, die eine bestimmte Ähnlichkeit mit den bereits ausgewählten Anlagenbildern aufweisen. Dadurch kann der Bediener noch effizienter die technische Anlage bedienen und beobachten.

Bevorzugt umfassen die zur Laufzeit der technischen Anlage individualisierbaren Anlagenbilder aktuelle (dynamische) Prozessalarme der technischen Anlage. Durch die Verknüpfung der individualisierbaren Anzeige von Anlagenbildern mit den jeweiligen, dazugehörigen Prozessalarmen erhält der Bediener des Leitsystems schneller einen umfassenden Überblick über einen Betriebsstatus der technischen Anlage und kann mögliche Problemfälle effizienter identifizieren und lokalisieren.

Im Rahmen einer vorteilhaften Weiterbildung der Erfindung ist der Individualisierungsdienst dazu ausgebildet und vorgesehen, Informationen über die zur Laufzeit der technischen Anlage individualisierbare Anzeige von Anlagenbildern in einem Speicher abrufbar zu hinterlegen. Auf diesen Speicher können bevorzugt weitere Bediener des Leitsystems zugreifen. Zudem kann es auch möglich sein, dass derselbe Bediener von verschiedenen Bedienstationen des Leitsystems auf die in dem Speicher hinterlegten Informationen über die Individualisierung der Anzeige von Anlagenbildern zurückgreifen kann.

Besonders bevorzugt umfasst der Individualisierungsdienst einen Anzeigedienst und einen Benutzerauswahldienst. Dabei ist der Anzeigedienst dazu ausgebildet und vorgesehen, zur Laufzeit der technischen Anlage einem Benutzer der technischen Anlage Prozessalarme und eine Anzeige von Anlagenbildern bereitzustellen. Der Benutzerauswahldienst wiederum ist dazu ausgebildet und vorgesehen, den Anzeigedienst hinsichtlich der Prozessalarme und der Anzeige von Anlagenbildern für den Benutzer zu individualisieren.

Der Anzeigedienst kann dabei gleichzeitig dafür zuständig sein, in bekannter Weise Bildhierarchien anzuzeigen, die in einer Engineering-Phase projektiert worden sind. Der Anzeigedienst kann zusätzlich dazu ausgebildet sein, zu den einzelnen Anlagenbildern dazugehörige Prozessalarme von dem Leitsystem abzurufen und dem Bediener bereitzustellen.

Die zuvor aufgeführte Aufgabe wird auch durch einen Operator Station Server eines Leitsystems einer technischen Anlage gelöst, auf dem ein Individualisierungsdienst implementiert ist, der wie zuvor erläutert ausgebildet ist.

Zudem wird die Aufgabe durch einen Operator Station Server gelöst, auf dem ein Individualisierungsdienst implementiert ist, der dazu ausgebildet und vorgesehen ist, Informationen über die zur Laufzeit der technischen Anlage individualisierbare Anzeige von Anlagenbildern in einem Speicher abrufbar zu hinterlegen. Dabei ist die auf dem Speicher hinterlegte Anzeige von Anlagenbildern von wenigstens einem, vorzugsweise allen weiteren Operator Station Servern des Leitsystems der technischen Anlagen abrufbar. Hierdurch kann ein Bediener nahezu unabhängig von einer Hardware, mittels der er auf das Leitsystem zugreift, die Vorteile des zuvor erläuterten Individualisierungsdienstes nutzen.

Die Aufgabe wird außerdem durch ein Leitsystem einer technischen Anlage, insbesondere Fertigungs- oder Prozessanlage, gelöst, welches wenigstens einen Operator Station Server aufweist, der wie zuvor erläutert ausgebildet ist.

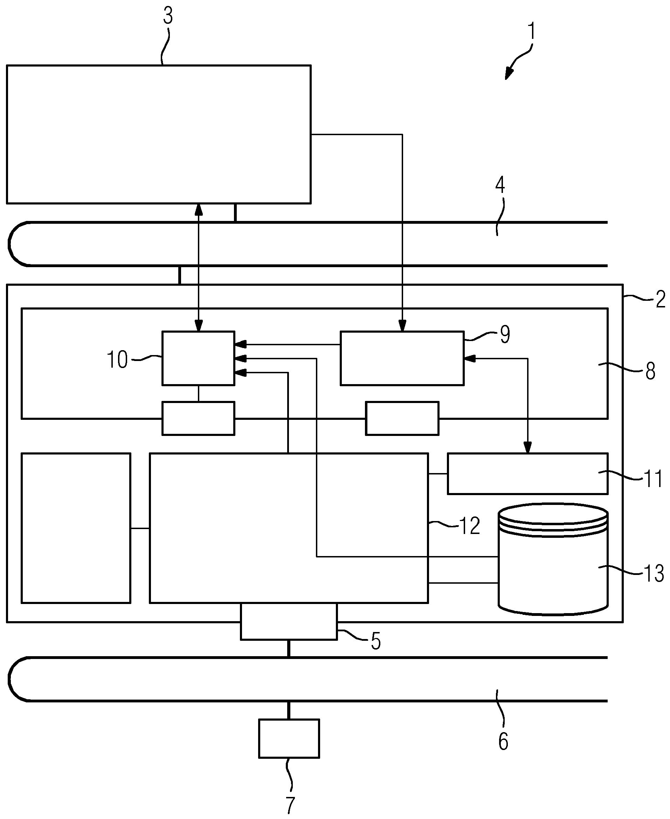

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird.

In der Zeichnung ist schematisch ein Teil eines erfindungsgemäßen Leitsystems 1 einer technischen Anlage dargestellt. Das Leitsystem 1 umfasst einen Operator Station Server 2 und einen dazugehörigen Operator Station Server Client 3.

Ein Bediener des Leitsystems 1 kann über den Operator Station Server Client 3 mit dem Operator Station Server 2 in Verbindung treten. Hierzu sind sowohl Operator Station Server Client 3 als auch der Operator Station Server 2 mit einem Terminalbus 4 verbunden. Der Terminalbus 4 kann, ohne sich darauf zu beschränken, beispielsweise als Industrial Ethernet ausgebildet sein.

Der Operator Station Server 2 weist einen Automatisierungstreiber 5 auf, mittels dessen er über einen an den Operator Station Server 2 angeschlossenen Anlagenbus 6 auf ein Gerät 7 zugreifen kann. Bei dem angeschlossenen Gerät 7 kann es sich dabei alternativ auch um eine Applikation, insbesondere Webapplikation, handeln. Im Rahmen der Erfindung kann eine beliebige Zahl an Geräten und/oder Applikationen an den Operator System Server 2 angeschlossen sein. Der Anlagenbus 6 kann, ohne sich darauf zu beschränken, beispielsweise als Industrial Ethernet ausgebildet sein. Das Gerät 7 kann wiederum mit einer beliebigen Anzahl an Subsystemen (nicht dargestellt) verbunden sein.

Auf dem Operator Station Server 2 ist ein Individualisierungsdienst 8 implementiert, welcher einen Benutzerauswahldienst 9 und einen Anzeigedienst 10 umfasst.

Der Benutzerauswahldienst 9 stellt die Funktionalität bereit, dynamisch zur Laufzeit einer technischen Anlage, die von dem Leitsystem 1 gesteuert und überwacht wird, eine Anzeige von Anlagenbildern bzw. Bildhierarchien zu individualisieren, um ein effizienteres Bedienen und Beobachten durch den Bediener zu ermöglichen. Die konfigurierten Bildhierarchien werden in einem Speicher 11, einem sogenannten "user selection manager", abgelegt. Auf diesen Speicher kann ein Bediener auch von außerhalb des Operator Station Servers 2 zugreifen.

Der Anzeigedienst 10 ist für die Anzeige und die Dynamisierung der Bildhierarchie verantwortlich, wie sie während einer Engineering-Phase projektiert wurde. Zusätzlich ist der Anzeigedienst 10 dazu ausgebildet, die zu die individualisierten Bildhierarchien bzw. Anzeigen von Anlagenbildern gehörigen Prozessalarme an den Operator Station Client 3 zu übertragen. Die Prozessalarme bezieht der Anzeigedienst 10 von einem Alarmmanager 12 des Leitsystems 1.

Der Anzeigedienst 10 erhält die Individualisierungsinformationen des Bedieners bzw. des Operator Station Server Clients 3 von dem Benutzerauswahldienst 9 und ruft sowohl die entsprechenden Anlagenbilder von einem Anlagenbildmanager 13 als auch die dazugehörigen Prozessalarme von dem Alarmmanager 12 ab und leitet sie an den Operator Station Server Client 3 weiter.

Durch die dynamisch zur Laufzeit der technischen Anlage individualisierbare und mit Prozessalarmen dynamisierte Bildhierarchie für ein effizienteres Bedienen und Beobachten kann der Bediener eine Bildhierarchie mit den für ihn wichtigsten Anlagenbildern - seinen Favoriten - erstellen. Somit ist es dem Bediener möglich, zwischen den für ihn jeweils wichtigsten Anlagenbildern effizient navigieren zu können, wobei er unter anderem durch die dynamisierte Gruppenalarmstatusanzeigen der favorisierten Anlagenbilder geführt wird.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Individualisierungsdienst (8) zur Implementierung in einem Leitsystem (1) einer technischen Anlage, insbesondere Fertigungs- oder Prozessanlage, der dazu ausgebildet und vorgesehen ist, einem Bediener des Leitsystems (1) eine zur Laufzeit der technischen Anlage individualisierbare Anzeige von Anlagenbildern bereitzustellen.

2. Individualisierungsdienst (8) nach Anspruch 1, der einen Individualisierungseingabestrom des Bedieners in einem lernfähigen System, insbesondere einem neuronalen Netzwerk, hinterlegt, um dem Bediener automatisiert Anlagenbilder vorzuschlagen, die er zur Individualisierung der Anzeige von Anlagenbildern einsetzen kann.

3. Individualisierungsdienst (8) nach Anspruch 1 oder 2, bei dem die zur Laufzeit der technischen Anlage individualisierbaren Anlagenbilder aktuelle Prozessalarme der technischen Anlage umfassen.

4. Individualisierungsdienst (8) nach einem der vorangegangenen Ansprüche, der dazu ausgebildet und vorgesehen ist, Informationen über die zur Laufzeit der technischen Anlage individualisierbare Anzeige von Anlagenbildern in einem Speicher (11) abrufbar zu hinterlegen.

5. Individualisierungsdienst (8) gemäß einem der vorangegangenen Ansprüche, der einen Anzeigedienst (10) und einen Benutzerauswahldienst (9) umfasst, wobei der Anzeigedienst (109 dazu ausgebildet und vorgesehen ist, zur Laufzeit der technischen Anlage einem Benutzer der technischen Anlage Prozessalarme und eine Anzeige von Anlagenbildern bereitzustellen, und wobei der Benutzerauswahldienst (9) dazu ausgebildet und vorgesehen ist, den Anzeigedienst hinsichtlich der Prozessalarme und der Anzeige von Anlagenbildern für den Benutzer zu individualisieren.

6. Operation Station Server (2) eines Leitsystems (1) einer technischen Anlage, auf dem ein Individualisierungsdienst (8) gemäß einem der Ansprüche 1 bis 3 oder 5 implementiert ist.

7. Operator Station Server (2) eines Leitsystems (1) einer technischen Anlage, auf dem ein Individualisierungsdienst (8) gemäß Anspruch 4 implementiert ist, wobei die auf dem Speicher (11) hinterlegte Anzeige von Anlagenbildern von wenigstens einem, vorzugsweise allen weiteren Operator Station Servern (2) des Leitsystems (1) der technischen Anlagen abrufbar ist.

8. Leitsystem (1) einer technischen Anlage, insbesondere Fertigungs- oder Prozessanlage, das wenigstens einen Operator Station Server (2) gemäß einem der Ansprüche 6 oder 7 umfasst.
